# EUROPEAN PATENT SPECIFICATION

(11) **EP 3 834 903 B1**
(45) Date of publication and mention of the grant of the patent: **18.06.2025**
(21) Application number: 20206903.5
(22) Date of filing: 11.11.2020
(51) Int. Cl.: B01D 29/33, B01D 29/54

(54) **FILTER ELEMENT, FILTER, FILTER DEVICE, AND METHOD OF USE**
FILTERELEMENT, FILTER, FILTERVORRICHTUNG UND VERWENDUNGSVERFAHREN
ÉLÉMENT DE FILTRE, FILTRE, DISPOSITIF DE FILTRE ET PROCÉDÉ D'UTILISATION

(30) Priority: 09.12.2019 US 201916707325
(43) Date of publication of application: 16.06.2021
(73) Proprietor: Pall Corporation, Port Washington, NY 11050 (US)
(72) Inventor: WHITLOCK, Michael B., Cortland, NY 13045 (US); BRAND, Samantha M., LaFayette, NY 13084 (US); CINQUANTI, Nicholas R., Homer, NY 13077 (US)
(74) Representative: J A Kemp LLP

(56) References cited:
- EP-A1- 3 078 405
- WO-A1-2014/059014
- GB-A- 2 214 447
- US-A- 3 392 843

## Description

### BACKGROUND OF THE INVENTION

A variety of filters are available to filter fluids (gasses and liquid). However, some filters, including some filters that are exposed to reverse flow, exhibit limited filtration life due to insufficient mechanical strength and/or are costly to produce.

WO 2014/059014 A1 discloses a pleated media pack including a section of media configured into a tube defining an interior volume and an open opening at one end. A ratio of the pleat depth to a diameter of the opening is greater than 0.2. At least some of the pleats at one end of the media pack are inverted. In some examples, the pleats include major pleats alternating with minor pleats.

GB 2 214 447 A relates to a filter element for a precoat filter having a septum formed with longitudinal pleats having broad roots proximal to a perforate core and narrow tips distal from the core. The filter element may include circumferential supporting bands spaced axially along the filter element and constraining the septum tips. In use a deposit of mechanical or ion exchange precoat is applied to the element before filtering and later removed by backwashing.

EP 3 078 405 A1 discloses a filter element having a pleated composite and first and second end elements mounted to opposite first and second ends of the filter element. The pleated composite has a filter medium layer and a grooved mesh drainage layer pleated with the filter medium layer. The grooved mesh drainage layer has a plurality of strands and a plurality of grooves formed in the strands. The grooved mesh drainage layer directs fluid via the grooves to or from the filter medium layer and the filter medium layer removes one or more substances from fluid flowing through the filter medium layer.

US patent US 3,392,843 relates to a disposable filter cartridge including an outer perforated shell, a paper filter element located within the shell including a plurality of pleated portions. Each of the pleated portions including a radial outer edge, each of the outer radial edges including a plurality of radially inwardly directed indentations at spaced apart points thereon, the indentations being aligned circumferentially and in abutting relationship to form a surface for disposing a filter reinforcing adhesive and to space adjacent pleats apart from one another to form inlets to the filter element.

The present invention provides for ameliorating at least some of the disadvantages of the prior art. These and other advantages of the present invention will be apparent from the description as set forth below.

### BRIEF SUMMARY OF THE INVENTION

The invention provides a porous filter element as defined in claim 1. The filter element comprises a hollow cylindrical porous metal medium having a first end and a second end, the hollow cylindrical porous metal medium comprising a plurality of pleats longitudinally arranged along an axis from the first end to the second end, each pleat comprising a plurality of portions each having a height H to width W aspect ratio, wherein the height H is about equal to or larger than the width W.

In another embodiment, a porous filter is provided, comprising an embodiment of the porous filter element. Typically, an embodiment of a porous filter comprises two or more embodiments of porous filter elements connected together.

Embodiments of the invention also comprise systems including the filters, and methods of filtration including passing fluid through embodiments of the porous filter element.

### BRIEF DESCRIPTION OF THE SEVERAL VIEWS OF THE DRAWING(S)

Figure 1 is a perspective view of a filter element according to an embodiment of the invention, also showing a plurality of pleats longitudinally arranged along an axis from the first end of the filter element to the second end.
Figure 2A is a perspective partial cut away view of the filter element shown in Figure 1, also showing a tapered end; Figure 2B is a cross-sectional view of filter element shown in Figure 1; Figure 2C is an enlarged view of the circled detail shown in Figure 2B; and Figure 2D is an enlarged view of detail F shown in Figure 2B, showing spacing and center to center distances between portions of a pleat in the z-direction (the longitudinal direction) according to an embodiment of the invention.

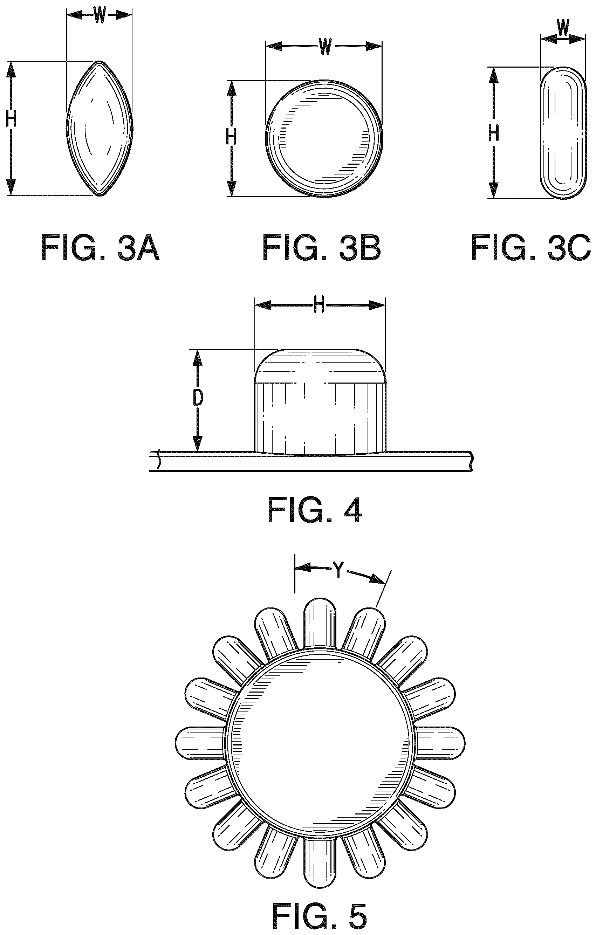

Figures 3A-3C illustrate different configurations of portions of the pleats according to embodiments of the invention, wherein, when viewing the top of the pleat, the different configurations have different height (H) to width (W) aspect ratios. In Figure 3A, the portion has a pointed oval appearance, with a height H to width W aspect ratio, wherein the height H is larger than the width W (shown in this Figure as 2: 1); in Figure 3B, the portion has a generally circular appearance, with a height H to width W aspect ratio of 1:1; and in Figure 3C the portion has a rounded oval appearance, with a height H to width W aspect ratio, wherein the height H is larger than the width W (shown in this Figure as 2.7:1).
Figure 4 shows a side view of a configuration of a portion of pleat illustrated in Figure 1 showing the depth and height of the portion.
Figure 5 shows, in an end view of a filter element with a closed end, spacing of the pleats in the circumferential direction, wherein the spacing between portions on adjacent pleats can be spaced at an angle x in the range of about 0.9° to about 180° with respect to the center of the filter element.
Figures 6A and 6B are perspective views of a filter according to an embodiment of the invention comprising two embodiments of filter elements connected together. Figure 7A shows the top (open) end, and Figure 7B shows the bottom (closed end).
Figure 7A is a perspective view of a filter according to another embodiment of the invention, comprising an embodiment of a filter element with a threaded end fitting at one end of the element, wherein the other end is closed. Figure 7B shows a perspective view of the threaded end fitting.

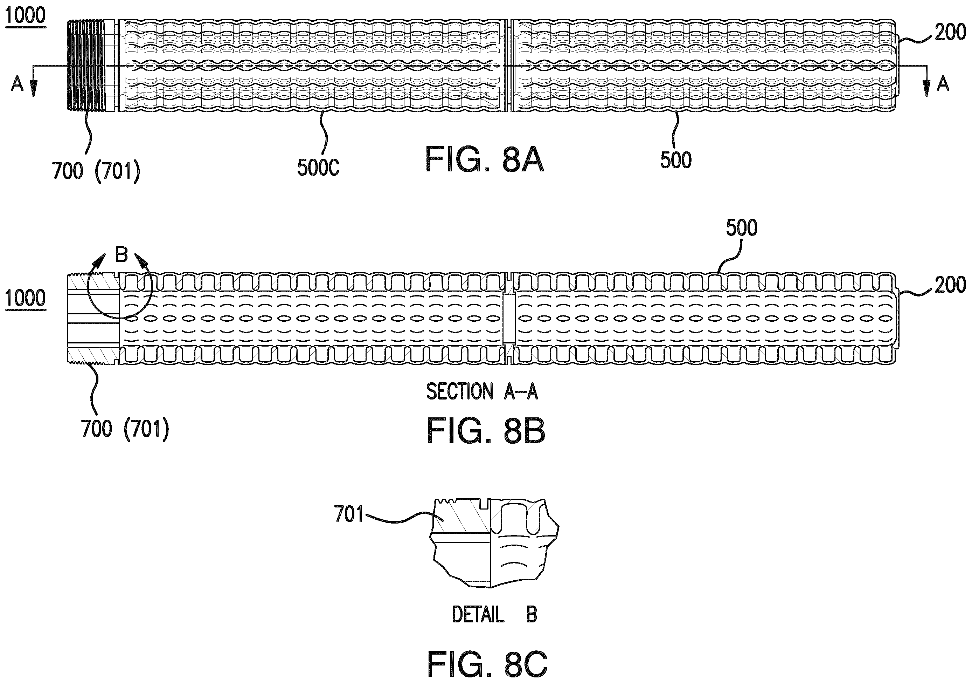

Figure 8A is a perspective view of a filter according to another embodiment of the invention, comprising two embodiments of filter elements connected together with a threaded end fitting at one end of one of the elements (wherein the other end of the element is open), wherein the other element has an open end (connected to the open end of the first element) and a closed end. Figure 8B shows a cross-sectional view of the filter shown in Figure 8A, and Figure 8C shows an enlarged view of detail B in Figure 8B, showing a threaded fitting that can be integral to the filter element or welded to the open end of the first filter element.
Figure 9A is a cross-sectional view of a filter according to another embodiment of the invention, comprising three embodiments of filter elements connected together with a venturi end fitting at one end of one of the elements (wherein the other end of the element is open), wherein the middle element is open and both ends (connected to the open ends of the first and third elements), and the third element has an open end (connected to the open end of the middle element) and a closed end. Figure 9B shows an enlarged view of detail B in Figure 9B, showing the open ends welded together.
Figures 10A-10C show various views of an illustrative filter system according to an embodiment of the invention, comprising a plurality of filters. Figure 10A shows a cross-sectional side view; Figure 10B shows a cross-sectional top view, and Figure 10C shows a cross-sectional bottom view.

### DETAILED DESCRIPTION OF THE INVENTION

In accordance with an embodiment of the invention, a porous filter element is provided, comprising a hollow cylindrical porous metal medium having a first end and a second end, the hollow cylindrical porous metal medium comprising a plurality of pleats longitudinally arranged along an axis from the first end to the second end, each pleat comprising a plurality of portions each having a height H to width W aspect ratio, wherein the height H is about equal to or larger than the width W. In a typical embodiment, the height H to width W aspect ratio is larger than 1, preferably the height H is at least 1.5 times larger than the width W, in some embodiments the height H is at least 2 times larger than the width W.

In another embodiment, a porous filter comprises an embodiment of the porous filter element. A porous filter can include one filter element, or a plurality of filter elements, for example, at least two filter elements, at least 5 elements, at least 10 elements, or more. Alternatively, or additionally, an embodiment of a porous filter can comprise an embodiment of at least one porous filter element wherein the porous filter element includes a fitting at one, or both, ends.

Embodiments of filters can include one or more separate filters, e.g., arranged as a plurality of separate tubes in a filter system.

Embodiments of the invention also comprise filter systems including the filters, and methods of filtration including passing fluid through embodiments of the porous filter element. In a preferred embodiment of a method of filtration, the fluid to be filtered is passed from the outside of the filter element into the interior. More preferably, after a fluid is filtered by passing it through the filter element, a cleaning fluid is passed through the filter in the opposite direction of filtration, e.g., involving reverse pulsing.

In an embodiment, a filter system comprises a plurality of filters arranged vertically. In a preferred embodiment of the system, the system comprises two or more filter modules, each filter module comprising a plurality of filters. Alternatively, or additionally, an embodiment of the filter system includes a reverse pulsing system.

The configuration of the portions of the porous filter elements can be varied for different applications. For example, for some applications that involve filtering solid particulates in a gas stream, and subsequently reverse pulsing, minimizing the horizontal surface of the portions (e.g., making the height:width aspect ratio of greater than 1) can be desirable.

Either, or both, ends of the filter element can be open or closed, e.g., one end can be open and the other end closed. Either end, or both ends, can include an end cap, and end caps can be open or closed. A closed end can be integral with the filter element, or provided by a separate end cap. Either end, or both ends, of the filter element can include a fitting, and fittings can be different at each end.

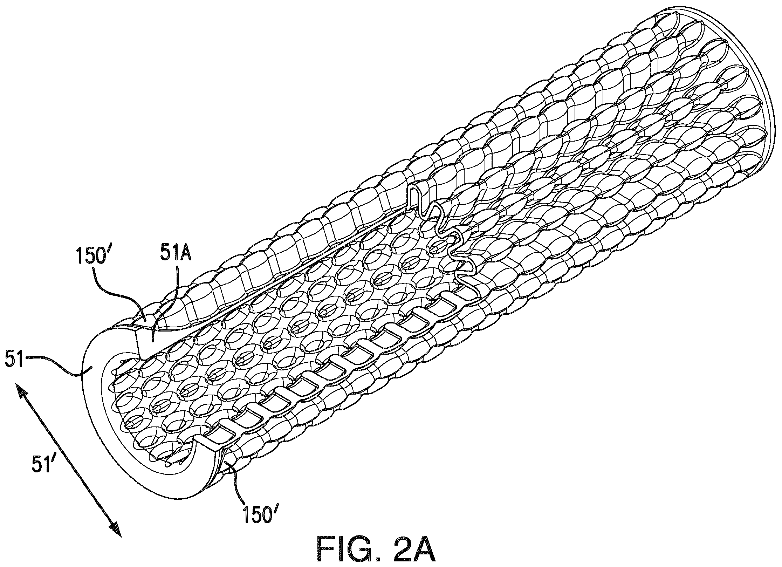

In some embodiments, at least one end, sometimes both ends, of the filter element are tapered such that the depth of the portions at the end flare out to meet the outside diameter of the filter element (*see, for example,* Figure 2A). This can provide for increased bend strength if desired for some applications.

Advantageously, filters and filter elements according to embodiments of the invention can have at least about 1.2 times (in preferred embodiments, at least about 1.5 times) more area in the same volume as a conventional cylinder. Moreover, filters and filter elements can allow for a reduced vessel (e.g., housing) diameter, which reduces cost and footprint.

In another advantage, filter elements can have a modular design, allowing for different lengths of filters with different fittings, e.g., national pipe taper (NPT), blind end (closed end cap), guide pin, o-ring, etc. Fittings can be attached to filter elements before or after sintering. In those embodiment of filters including two or more filter elements, elements can be connected in a variety of ways, e.g., via fittings and/or welding.

For industrial applications in particular, filters and filter elements have excellent mechanical strength, having been tested for over 20,000 blowback cycles and over 200,000 fatigue cycles in laboratory tests.

Each of the components of the invention will now be described in more detail below, wherein like components have like reference numbers.

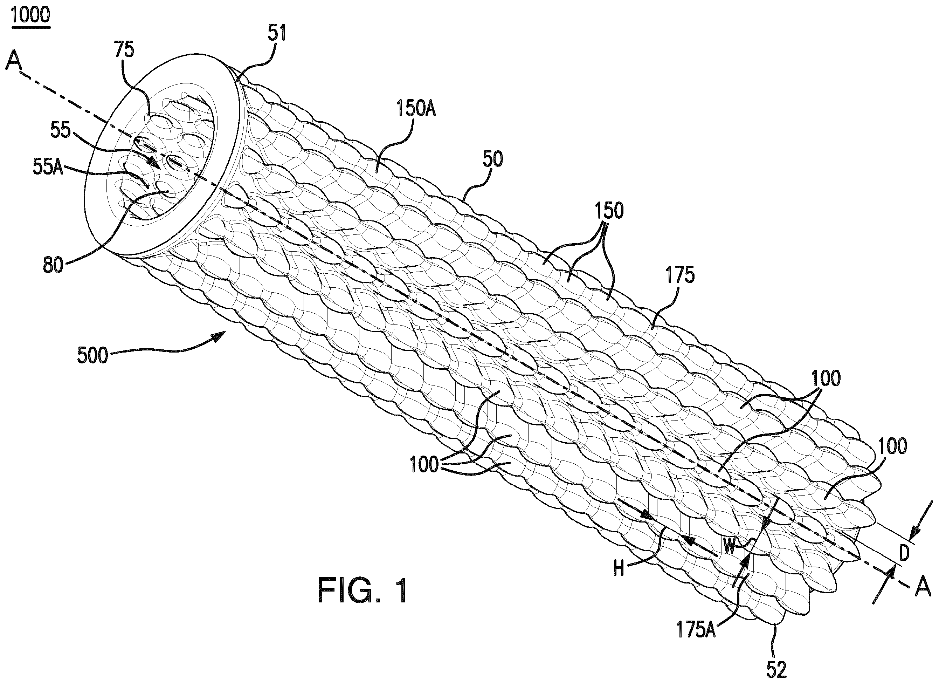

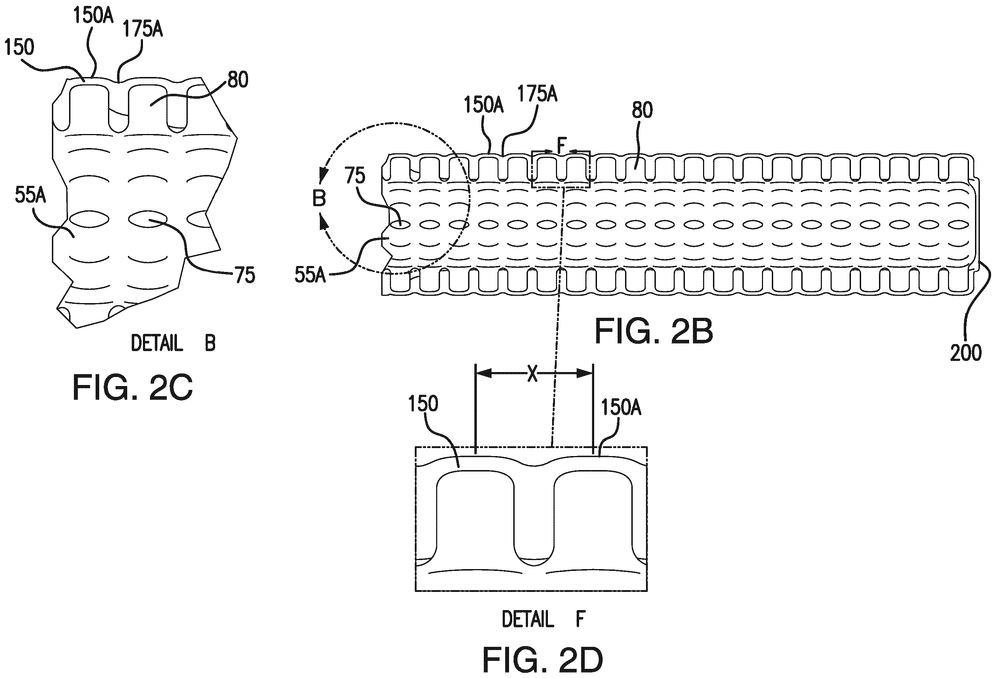

In the illustrated embodiment shown in Figures 1 and 2A, a filter 1000 comprises a porous filter element 500 comprising a hollow cylindrical porous metal medium 50 having a hollow interior 55 including an interior surface 55A defining the hollow interior, a first end 51, and a second end 52. The filter element includes a plurality of pleats 100 longitudinally arranged along an axis A from the first end to the second end, each pleat comprising a plurality of portions 150 having a height H to width W aspect ratio, wherein the height H is equal to or larger than the width W. Typically, when viewed from the side (e.g., as shown in Figures 2B and 2C), the top surfaces 150A of the portions are slightly convex or slightly planar, rather than concave.

While there can be a gap between consecutive portions, in the illustrated embodiments, the consecutive portions are connected by a bridge 175. The presence of a bridge can be desirable in allowing for increased surface area and increased mechanical strength of the element. Typically, when viewed from the side (e.g., as shown in Figures 2B and 2C), the top surface 175A of the bridge is lower than the top surface 150A of the portions.

As shown in Figures 1, 2B and 2C the interior surface 55A includes concave openings 75, communicating with hollow interiors 80 of each portion, the portions being closed at the top (covered by top surfaces 150A).

In some embodiments, at least one end of the filter element is tapered such that the depth of the portions at the end flare out to meet the outside diameter of the filter element. In the embodiment shown in Figure 2A, the end 51 of the filter element has a taper 51A, such that the depth of the portions 150'at the end flares out to meet the outside diameter 51' of the filter element. If desired, both ends of a filter element can be similarly or identically tapered.

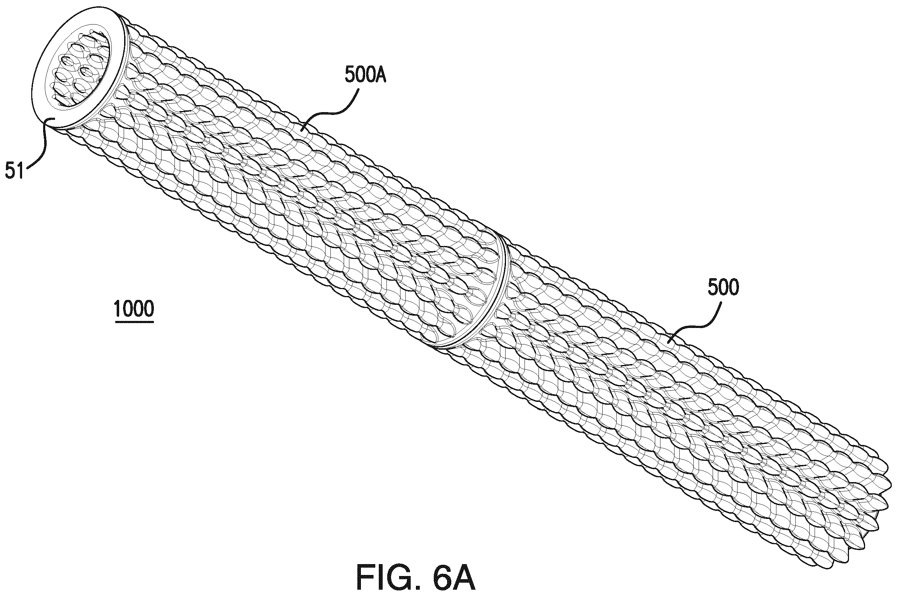

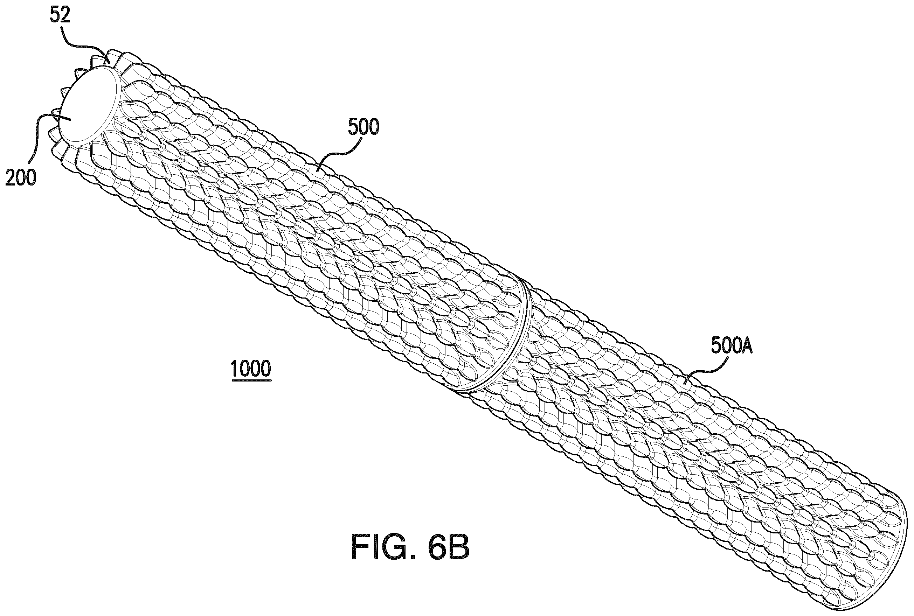

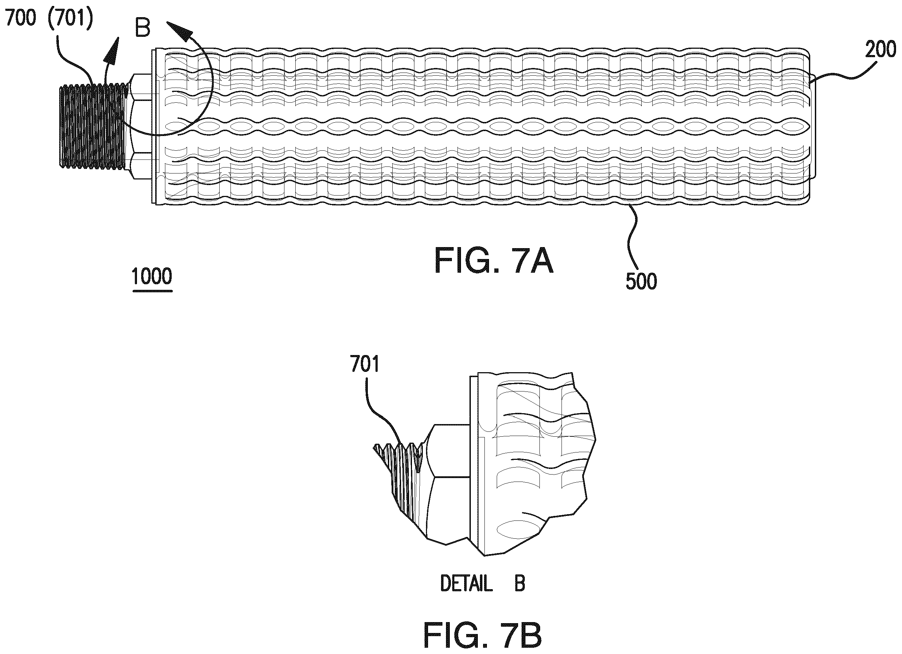

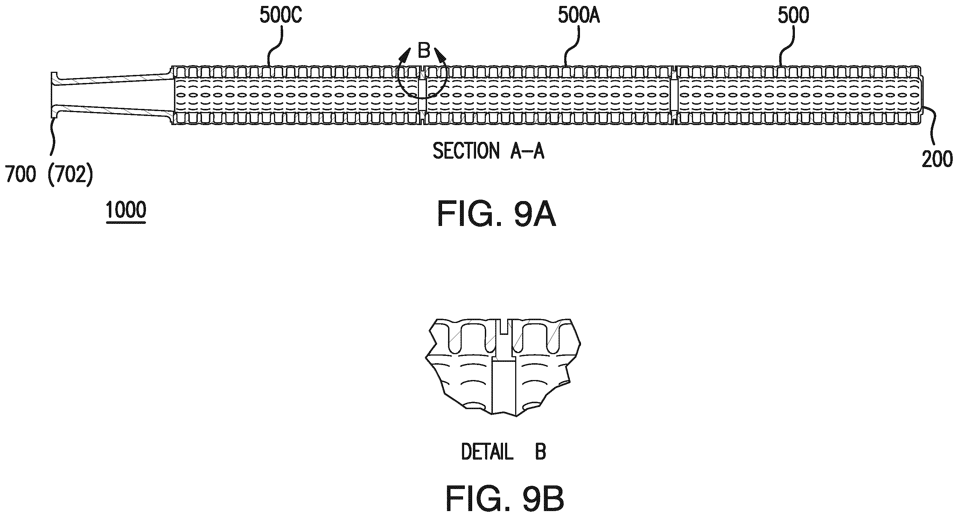

As noted above, either end, or both ends, of the filter or filter element, can include an end cap, and end caps can be open or closed. Figures 2B, 6B, 7A, 8A, 8B, and 9A show an end cap 200. In the embodiment illustrated in Figures 6A, 6B, 7A, 8A, 8B, and 9A, porous filter element 500 is closed at one end with an end cap, porous filter element 500A as illustrated in Figures 6A, 6B, and 9A is open at both ends. Alternatively, or additionally, either end, or both ends, of the filter or filter element, can include fittings, for example, the embodiments shown in Figures 7A, 8A, 8B, and 9A show fittings 700, e.g., NPT 701, and venture fitting 702 (Fig. 9A).

Typically, using Figure 2D for general reference, consecutive portions have center to center (X) distances in the range of from about .05 cm to about 5.1 cm (about .02 inches to about 2 inches).

Typically, using Figure 4 for general reference, the depth (D) of a portion can be in the range of from about .03 cm to about 6.1 cm (about .01 inches to about 2.40 inches), and the typical height (H) of a portion can be in the range of from about .08 cm to about 140 cm (about .03 inches to about 55 inches). A ratio of height to depth in accordance with an embodiment of the invention is typically in the range of about 1:1 to about 10:1, preferably in the range of from about 1:1 to about 2: 1, in some embodiments, about 1.3:1.

Typically, using Figure 5 for general reference, spacing between portions on adjacent pleats can be spaced at an angle (Y) in the range of about 0.9° to about 180° with respect to the center of the filter element.

Typically, the width of a portion can be in the range of from about .08 cm to about 12.7 cm (about .03 inches to about 5 inches).

Typically, the number of rows of pleats in each element is in the range of 2 rows to about 3700 rows.

Typically, the outer diameter of the filter element is in the range of about .05 cm to about 12.7 cm (about .2 inches to about 5 inches); typically, the inner diameter of the filter element is in the range of about .51 cm to about 12.7 cm (about .2 inches to about 5 inches).

Typically, the element wall thickness is in the range of from about .03 cm to about .30 cm (about 0.01 inches to about 0.12 inches).

Typically, filter elements have lengths in the range of from about 5.1 cm to about 305 cm (about 2 inches to about 120 inches) and/or external diameters in the range of about .51 cm to about 12.7 cm (about 0.2 inches to about 5 inches).

The filter elements, pleats, portions, and end caps (if present, and if porous) can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or removal rating media. The pore structure used depends on the size of the particles to be utilized, the composition of the fluid to be treated, and the desired effluent level of the treated fluid.

Typically, in accordance with some embodiments of the invention, the porous elements, pleats, and portions, each have a pore size in the range of from about 2 micrometers (µm) to about 70 micrometers.

The particles used to produce the filters and filter elements can comprise a variety of metal powders, and filters and filter elements can be, for or example, formed from stainless steel powder, such as 316 low-carbon stainless steel and 310 stainless steel, by a process including sintering. Other suitable metal powders include, for example, alloys (e.g., HASTELLOY^{®} X, and HAYNES^{®} HR-160^{®} (Haynes International); and Inconel 600), nickel, chromium, tungsten, copper, bronze, aluminum, platinum, iron, magnesium, cobalt, or a combination (including a combination of metals and metal alloys) thereof.

The particles can be any suitable size, and filters and filter elements can include a distribution of particle sizes. The size(s) of the particles for a particular application is related to the desired pore size in the finished filter and filter element.

The hollow filter element can have any suitable inner and outer diameter and length.

Preferably, the filter and filter elements are sterilizable, illustratively, able to be cleaned in place (CIP) via, for example, steam sterilization or chemical sterilization.

Filter elements according to embodiments of the invention are preferably monolithic, preferably manufactured via additive manufacturing (sometimes referred to as "additive layer manufacturing" or "3D printing"). They are typically formed by repeated depositions of a metal powder bound together with an activatable binder (e.g., binder jetting, sometimes referred to as "drop on powder"), typically followed by agglomerating the powder, e.g., by sintering. The end caps (if present) and filter elements can be manufactured together via additive manufacturing in a continuous operation at substantially the same time.

Any suitable additive manufacturing equipment can be used, and a variety of production 3D printers are suitable and commercially available.

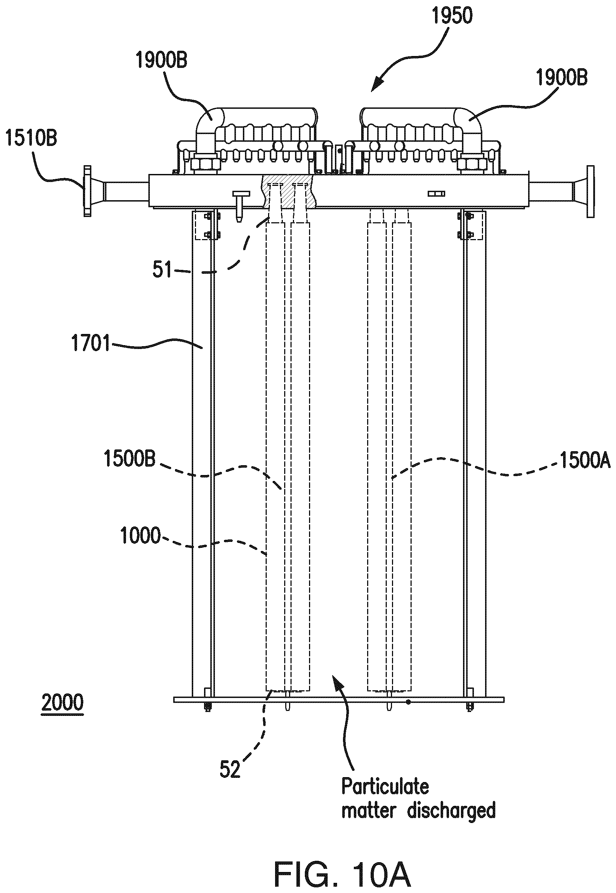

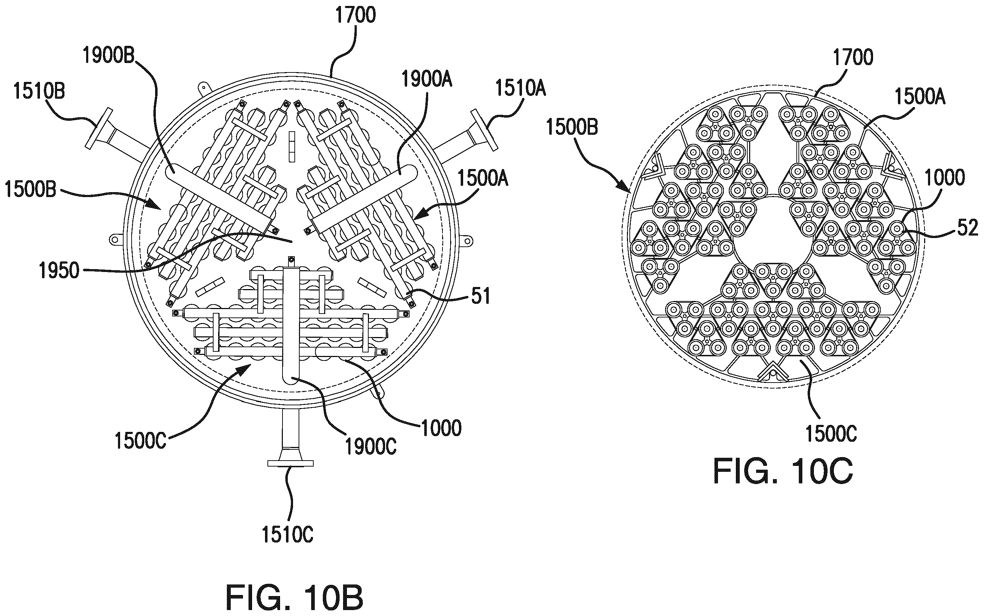

Figures 10A-10C shown an illustrative filter system according to an embodiment of the invention. The illustrated embodiment of the filter system (sometimes referred to as a tubesheet/filter bundle) 2000 comprises a plurality of filters 1000 arranged vertically (wherein 1700 in Figures 10B and 10C reflects the outer diameter of the tube sheet), the system typically comprising a feed for fluid (e.g., liquid or gas) to be filtered, and a discharge channel for filtered liquid or gas. In the illustrated embodiment, the filter system comprises a lower grid plate 1701, and plurality of modules 1500A, 1500B, 1500C, with respective inlet piping for back pulse gas channels 1510A, 1510B, 1510C, each module comprising a plurality of filters 1000. A feed channel (not shown) for raw liquid (e.g., raw gas) would be located in a housing shell.

Typically, the housing can be divided into raw gas chamber receiving the gas to be filtered, and a clean gas chamber for the filtered gas.

Preferably, embodiments of the system are arranged to allow reverse-flushing (back-pulsing), followed by filtration, without removing the filters or modules from a housing. Figures 10A and 10B show a reverse-flushing system 1950 comprising back-pulsing channels 1900A, 1900B, and 1900C. If desired, the reverse-flushing system can include a pressure source.

The particulate matter discharged during reverse-flushing is preferably collected by gravity in dust collectors arranged at the bottom of the housing, outside of the housing. The filters or modules are arranged (e.g., by staggering when reverse-flushing) such that, upon reverse-flushing, when particulate matter is detached from the filter elements, no cross-contamination between neighboring filters or filter modules can occur.

The following examples further illustrate the invention but, of course, should not be construed as in any way limiting its scope.

### EXAMPLE 1

This example demonstrates the improvement in area per unit length of filter elements according to an embodiment of the invention compared to commercially available cylindrical filters.

Filter elements are produced with one tapered end and one blind end. 2.54 cm (1") NPT fittings are welded onto three filter elements to test them simultaneously and compared to 3 commercially available hollow cylindrical filter elements that have areas corresponding to the produced filter elements. The 3 sets of areas are 0.124 actual liter per minute/cm² (alpm/cm²); 0.161 alpm/cm² and 0.226 alpm/cm² (0.8 actual liter per minute/square inch (alpm/in²); 1.04 alpm/in², and 1.46 alpm/in²).

While both sets of filter elements have the same area and inner and outer diameters, the commercially available filters are twice as long as the filter elements according to embodiments of the invention.

The differential pressures (delta P's) for the commercially available filters are 1.675 kPa, 2.310 kPa, and 3.39 kPa (0.243 psi, 0.335 psi, and 0.491 psi), respectively, and the delta P's for the embodiments of the invention are 1.56 kPa, 2.12 kPa, and 3.56 kPa (0.226 psi, 0.307 psi, and 0.516 psi).

The example shows that embodiments of the invention have more area per unit length than the commercially available filters while exhibiting comparable delta P's.

### EXAMPLE 2

This example demonstrates additional advantages in the improvement in area per unit length of filter elements according to an embodiment of the invention compared to commercially available cylindrical filters.

Simulated blowback testing of the filter elements as described in Example 1 is carried out with a low inlet face velocity of the 0.124 alpm/cm² (0.8 alpm/in²) filter elements, a medium inlet face velocity with the 0.161 alpm/cm² (1.04 alpm/in²) filter elements, and a high inlet face velocity with the 0.226 alpm/cm² (1.46 alpm/in²) filters.

The stable delta P's for the commercially available filters are 1.675 kPa, 2.310 kPa, and 3.39 kPa (0.243 psi, 0.335 psi, and 0.491 psi), and the stable delta P's for the embodiments of the invention are 1.56 kPa, 2.12 kPa, and 3.56 kPa (0.226 psi, 0.307 psi, and 0.516 psi).

### EXAMPLE 3

This example demonstrates additional advantages in the improvement in area per unit length of filter elements according to an embodiment of the invention compared to commercially available cylindrical filters.

This test is performed by comparing embodiments of the invention that are half the length, but the same area as the commercially available filters.

Simulated blowback testing of the filter elements as described in Example 1 is carried out with the same system inlet flow using the same 3 sets of filter elements. The stable delta P's for the commercially available filters are 3.39 kPa (0.491 psi), and for embodiments of the invention are 1.56 kPa (0.226 psi). This shows that for embodiments of filter elements according to the invention having the same length as commercially available filter elements, the stable delta P's for embodiments of the invention would be about half that of commercially available filter elements.

### EXAMPLE 4

This example demonstrates improvement in dirt capacity of a filter element according to an embodiment of the invention compared to a commercially available cylindrical filter.

A filter element according to an embodiment of the invention is produced as in example 1, and a 25.4 cm (10") long commercially available cylindrical filter element is obtained. The filter elements have essentially the same area.

The dirt capacity of the commercially available filter element is 2.7 g, and the dirt holding capacity (DHC) is 66.29 g/m² (6.1 g/ft²), whereas the dirt capacity of the filter element according to an embodiment of the invention is 4.5 g, and the DHC is 53.82 g/m² (5.0 g/ft²). Since the DHC is normalized per unit area, the important comparison is dirt capacity.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A porous filter element (500) comprising a hollow cylindrical porous metal medium (50) having a first end and a second end (51; 52), the hollow cylindrical porous metal medium (50) comprising a plurality of pleats (100) longitudinally arranged along an axis A from the first end to the second end (51; 52) of the hollow cylindrical porous metal medium (50), each pleat (100) comprising a plurality of portions (150), said portions (150) having a height H extending parallel to said axis A and a width W perpendicular to said height H, each portion (150) having a height H to width W aspect ratio, wherein the height H is equal to or larger than the width W, and
wherein there is a gap between consecutive portions (150) or the consecutive portions (150) are connected by a bridge (175).

2. The porous filter element (500) of claim 1, wherein the plurality of portions (150) each have a height H to width W aspect ratio, wherein the height H is larger than the width W.

3. The porous filter element (500) of claim 1, wherein the plurality of portions (150) each have a height H to width W aspect ratio, wherein the height H is more than 1.5 times larger than the width W.

4. The porous filter element (500) of any one of claims 1-3, wherein the hollow cylindrical porous metal medium (50) has a hollow interior (55) and an interior surface (55A), and the plurality of portions (150) each have a hollow interior (80), an open end formed in the interior surface (55A), and a closed top end (150A) having the height H to width W aspect ratio, wherein the height H is equal to or larger than the width W.

5. The porous filter element (500) of any one of claims 1-4, wherein at least the first end (51) is tapered.

6. The porous filter element (500) of any one of claims 1-5, wherein a center to center distance between consecutive portions (150) in a pleat (100) is in the range of 0.05 cm to 5.1 cm (.02 inches to 2 inches).

7. The porous filter element (500) of any one of claims 1-6, wherein at least the first end (51) is open.

8. The porous filter element (500) of any one of claims 1-6, wherein at least the first end (51) is closed.

9. A porous filter (1000), comprising the porous filter element (500) of any one of claims 1-8, wherein the first end (51) further comprises a fitting (700).

10. A method of filtering fluid, the method comprising passing the fluid through the porous filter element (500) of any one of claims 1-8, or the porous filter (1000) of claim 9 .

11. The method of claim 10, comprising passing the fluid from outside the porous filter element (500) or porous filter (1000) into the hollow interior (55) of the porous filter element (500) or the porous filter (1000).

12. The method of claim 10 or 11, further comprising passing a cleaning fluid through the porous filter element (500) or the porous filter (1000) in the opposite direction of filtration;
optionally the method further comprising reverse pulsing.

13. A filter system (2000) comprising a plurality of filters (1000) of claim 9 arranged vertically.

14. The filter system (2000) of claim 13, further comprising a reverse pulsing system (1950).

## Patentansprüche

1. Poröses Filterelement (500), umfassend ein hohlzylindrisches poröses Metallmedium (50), das ein erstes Ende und ein zweites Ende (51; 52) aufweist, wobei das hohlzylindrische poröse Metallmedium (50) eine Vielzahl von Falten (100) umfasst, die in Längsrichtung entlang einer Achse A vom ersten Ende zum zweiten Ende (51; 52) des hohlzylindrischen porösen Metallmediums (50) angeordnet sind, wobei jede Falte (100) eine Vielzahl von Abschnitten (150) umfasst, wobei die Abschnitte (150) eine Höhe H aufweisen, die sich parallel zur Achse A erstreckt, und eine Breite W, die senkrecht zur Höhe H verläuft, wobei jeder Abschnitt (150) ein Seitenverhältnis von Höhe H zu Breite W aufweist, wobei die Höhe H gleich oder größer ist als die Breite W, und
wobei zwischen aufeinanderfolgenden Abschnitten (150) eine Lücke ist oder die aufeinanderfolgenden Abschnitte (150) durch eine Brücke (175) verbunden sind.

2. Poröses Filterelement (500) nach Anspruch 1, wobei die Vielzahl von Abschnitten (150) jeweils ein Seitenverhältnis von Höhe H zu Breite W aufweisen, wobei die Höhe H größer ist als die Breite W.

3. Poröses Filterelement (500) nach Anspruch 1, wobei die Vielzahl von Abschnitten (150) jeweils ein Seitenverhältnis von Höhe H zu Breite W aufweisen, wobei die Höhe H mehr als 1,5 mal größer ist als die Breite W.

4. Poröses Filterelement (500) nach einem der Ansprüche 1-3, wobei das hohlzylindrische poröse Metallmedium (50) einen hohlen Innenraum (55) und eine Innenfläche (55A) aufweist, und die Vielzahl von Abschnitten (150) jeweils einen hohlen Innenraum (80), ein in der Innenfläche (55A) ausgebildetes offenes Ende und ein geschlossenes oberes Ende (150A) mit dem Seitenverhältnis Höhe H zu Breite W aufweisen, wobei die Höhe H gleich oder größer ist als die Breite W.

5. Poröses Filterelement (500) nach einem der Ansprüche 1-4, wobei mindestens das erste Ende (51) verjüngt ist.

6. Poröses Filterelement (500) nach einem der Ansprüche 1-5, wobei ein Abstand von Mitte zu Mitte zwischen aufeinanderfolgenden Abschnitten (150) in einer Falte (100) im Bereich von 0,05 cm bis 5,1 cm (0,02 Zoll bis 2 Zoll) liegt.

7. Poröses Filterelement (500) nach einem der Ansprüche 1-6, wobei mindestens das erste Ende (51) offen ist.

8. Poröses Filterelement (500) nach einem der Ansprüche 1-6, wobei mindestens das erste Ende (51) geschlossen ist.

9. Poröser Filter (1000), umfassend das poröse Filterelement (500) nach einem der Ansprüche 1-8, wobei das erste Ende (51) weiter ein Verbindungsstück (700) umfasst.

10. Verfahren zum Filtern eines Fluids, wobei das Verfahren das Durchleiten des Fluids durch das poröse Filterelement (500) nach einem der Ansprüche 1-8 oder den porösen Filter (1000) nach Anspruch 9 umfasst.

11. Verfahren nach Anspruch 10, umfassend das Leiten des Fluids von außerhalb des porösen Filterelements (500) oder des porösen Filters (1000) in den hohlen Innenraum (55) des porösen Filterelements (500) oder des porösen Filters (1000).

12. Verfahren nach Anspruch 10 oder 11, weiter umfassend das Durchleiten eines Reinigungsfluids durch das poröse Filterelement (500) oder den porösen Filter (1000) in der entgegengesetzten Richtung der Filtrierung;
wobei das Verfahren gegebenenfalls weiter einen Rückwärtsimpuls umfasst.

13. Filtersystem (2000) umfassend eine Vielzahl von vertikal angeordneten Filtern (1000) nach Anspruch 9.

14. Filtersystem (2000) nach Anspruch 13, weiter umfassend ein Rückwärtsimpulssystem (1950).

## Revendications

1. Élément (500) de filtre poreux, comprenant un support métallique poreux cylindrique creux (50) présentant une première extrémité et une seconde extrémité (51 ; 52), le support métallique poreux cylindrique creux (50) comprenant une pluralité de plis (100) longitudinalement agencés le long d'un axe A allant de la première extrémité à la seconde extrémité (51 ; 52) du support métallique poreux cylindrique creux (50), chaque pli (100) comprenant une pluralité de parties (150), lesdites parties (150) présentant une hauteur H s'étendant parallèlement audit axe A et une largeur W perpendiculaire à ladite hauteur H, chaque partie (150) présentant un rapport d'aspect de la hauteur H à la largeur W, dans lequel la hauteur H est égale à ou plus grande que la largeur W, et dans lequel il y a un interstice entre des parties (150) consécutives ou les parties (150) consécutives sont raccordées par un pont (175).

2. Élément (500) de filtre poreux selon la revendication 1, dans lequel la pluralité de parties (150) présentent chacune un rapport d'aspect de la hauteur H à la largeur W, dans lequel la hauteur H est plus grande que la largeur W.

3. Élément (500) de filtre poreux selon la revendication 1, dans lequel la pluralité de parties (150) présentent chacune un rapport d'aspect de la hauteur H à la largeur W, dans lequel la hauteur H est plus de 1,5 fois plus grande que la largeur W.

4. Élément (500) de filtre poreux selon l'une quelconque des revendications 1 à 3, dans lequel le support métallique poreux cylindrique creux (50) présente un intérieur creux (55) et une surface intérieure (55A), et la pluralité de parties (150) présentent chacune un intérieur creux (80), une extrémité ouverte formée dans la surface intérieure (55A), et une extrémité supérieure fermée (150A) présentant le rapport d'aspect de la hauteur H à la largeur W, dans lequel la hauteur H est égale à ou plus grande que la largeur W.

5. Élément (500) de filtre poreux selon l'une quelconque des revendications 1 à 4, dans lequel au moins la première extrémité (51) est conique.

6. Élément (500) de filtre poreux selon l'une quelconque des revendications 1 à 5, dans lequel une distance de centre à centre entre des parties (150) consécutives dans un pli (100) est dans la plage de 0,05 cm à 5,1 cm (.02 pouce à 2 pouces).

7. Élément (500) de filtre poreux selon l'une quelconque des revendications 1 à 6, dans lequel au moins la première extrémité (51) est ouverte.

8. Élément (500) de filtre poreux selon l'une quelconque des revendications 1 à 6, dans lequel au moins la première extrémité (51) est fermée.

9. Filtre poreux (1000), comprenant l'élément (500) de filtre poreux selon l'une quelconque des revendications 1 à 8, dans lequel la première extrémité (51) comprend en outre un raccord (700).

10. Procédé de filtration de fluide, le procédé comprenant le passage du fluide à travers l'élément (500) de filtre poreux selon l'une quelconque des revendications 1 à 8, ou le filtre poreux (1000) selon la revendication 9.

11. Procédé de la revendication 10, comprenant le passage du fluide à partir de l'extérieur de l'élément (500) de filtre poreux ou du filtre poreux (1000) dans l'intérieur creux (55) de l'élément (500) de filtre poreux ou le filtre poreux (1000).

12. Procédé selon la revendication 10 ou la revendication 11, comprenant en outre le passage d'un fluide de nettoyage à travers l'élément (500) de filtre poreux ou le filtre poreux (1000) dans la direction opposée de filtration ;
facultativement, le procédé comprenant en outre une pulsation inverse.

13. Système (2000) de filtre, comprenant une pluralité de filtres (1000) selon la revendication 9 agencés verticalement.

14. Système (2000) de filtre selon la revendication 13, comprenant en outre un système de pulsation inverse (1950).
